# EUROPÄISCHE PATENTANMELDUNG

(11) **EP 2 187 079 A1**
(43) Veröffentlichungstag der Anmeldung: **19.05.2010**
(21) Anmeldenummer: 09175836.7
(22) Anmeldetag: 12.11.2009
(51) Int. Cl.: F16D 65/12

(54) **Faserverstärkte Reibringstruktur**

(30) Priorität: 14.11.2008 DE 102008057487
(71) Anmelder: SGL Carbon SE, 65203 Wiesbaden (DE)
(72) Erfinder: Benitsch, Bodo, 86647, Buttenwiesen (DE); Hell, Blasius, 86688, Marxheim (DE)

(57) **Zusammenfassung**

Die Erfindung betrifft eine faserverstärkte Reibringstruktur, die aus einem faserverstärkten Werkstoff aufgebaut ist und eine räumliche Trennung zwischen dem Anbindungsbereich (Ort der Anbindung) und dem Reibflächenbereich (Ort der Reibwirkung) vorliegt. Die Reibringstruktur ist in die 5 Bereiche Anbindungsbereich (I), innerer Ringbereich (II), äußerer Ringbereich (III), Sub-Strukturbereich (IV) und Reibflächenbereich (V) eingeteilt.

## Beschreibung

Die vorliegende Erfindung betrifft eine faserverstärkte Reibringstruktur, die aus faserverstärktem Kunststoff oder aus faserverstärkter Keramik oder aus einer Kombination aus beiden aufgebaut ist.

Im Prinzip bestehen bekannte Reibringstrukturen aus einem Reibring und einem Mittelteil. Der Reibring bildet die Fläche, auf der die Bremsbeläge zum Bremsen eine Reibkraft ausüben. Die Fläche des Bremsbands und der Durchmesser der Scheibe ist auf die Masse des abzubremsenden Fahrzeugs abgestimmt. Das Mittelteil des Reibrings dient der Befestigung an der Nabe des abzubremsenden Rads. Es weist in der Regel eine große Bohrung auf, durch die beispielsweise beim Fahrrad die Achse des abzubremsenden Rads tritt, sowie einige kreisförmig um die große Bohrung angeordnete kleine Bohrungen, durch die in der Regel Schrauben zur Befestigung des Reibrings an der Nabe treten. Alternativ kann der Reibring auch an der Nabe befestigt werden.

Ein Grossteil der beim Bremsen erzeugten Wärme dringt in die Scheibe ein. Ein übermäßiger Temperaturanstieg des Reibrings bewirkt eine Überhitzung des Reibbelags. Dies verursacht eine Schädigung des Materials (Verglasung der Oberfläche) und das Aufheizen der Bremsflüssigkeit (Gefahr der Dampfblasenbildung). Bei Fahrradbremsen beispielsweise sind die Bremsleitungen im Gegensatz zu Personenkraftwagen aus weniger hitzebeständigem Material ausgebildet, so dass es im Extremfall zum Lösen einer Bremsleitung an dem Bremssattel kommen kann. Daher ist es erforderlich, dass die Wärme schnell wieder abgeführt wird.

Bei Fahrrädern oder Motorrädern haben sich wegen des geringen zur Verfügung stehenden axialen Bauraums Bremsscheiben (meist Scheibenbremsen) aus Stahlblech durchgesetzt, bei denen das Bremsband mit dem Mittelteil über Streben verbunden ist. Aufgrund der im Vergleich zu Personenkraftwagen relativ großen Verwindungen zwischen der Befestigung des Bremssattels und der Befestigung der Bremsscheibe ist es in der Regel notwendig, ein relativ flexibles Material einzusetzen. Die damit verbundenen Nachteile der axialen Flexibilität als auch die Neigung zu hörbaren Eigenschwingungen, müssen dabei in Kauf genommen werden.

Reibringe werden beispielsweise in Brems- und Haltesystemen eingesetzt. Sie unterliegen zunehmend den Anforderungen von gewichtsoptimierter Geometrie- und Materialauswahl in Kombination mit hoher Friktionswirkung bei gleichzeitig geringem Verschleiß.

Besonders wichtig und vorteilhaft für industrielle Anwendungen ist es dabei, dass die Reibringstruktur (Scheiben und/oder Reibflächendicke) auch in bestehende Bremssysteme eingebaut werden kann.

Aufgabe der Erfindung ist es, bei einer mindestens aus dem Stand der Technik bekannten Bremsleistung, wie sie eine High-End Lösung bietet, eine deutliche Gewichtsreduktion der faserverstärkten Reibringstruktur zu erzielen. Dabei wird das Gewicht um 10-20 % reduziert. Dabei soll sich die Standzeit der Reibringstruktur deutlich erhöhen und die Lebenszeit mindestens verdoppelt werden.

Gelöst wird diese Aufgabe durch eine Kombination von faserverstärkten Werkstoffen, optional in Kombination mit Metallen und/oder in Kombination mit Keramiken. Diese positiven Eigenschaften schlagen sich in der Wirtschaftlichkeit und Effizienz der Strukturen im Einsatz nieder.

Unter den Metallen werden Eisen und Eisenlegierungen, Aluminium, Magnesium, Titan, Bronze, Silicium, Ferrosilicum und Kupfer bevorzugt. Gegebenenfalls können auch Schmiermittel wie Graphit oder Molybdänsulfid zugesetzt werden.

Gegenstand der Erfindung ist eine Reibringstruktur, **dadurch gekennzeichnet, dass** diese aus einem faserverstärkten Werkstoff aufgebaut ist und eine räumliche Trennung zwischen dem Anbindungsbereich (Ort der Anbindung) und dem Reibflächenbereich (Ort der Reibwirkung) vorliegt.

Beispielsweise kann der thermisch weniger stark, dafür mechanisch aber stark belastete Teil der Reibringstruktur aus faserverstärktem Kunststoff oder aus faserverstärkter Keramik (definitionsgemäß zählt hierzu auch kohlenstofffaserverstärkter Kohlenstoff) aufgebaut werden. Das Reibringmaterial ist außerordentlich korrosionsbeständig und damit unempfindlich gegenüber Streusalzwirkung.

Die Anbindungspunkte zur Substruktur können metallisch ausgeführt sein oder aus metallischen Einlagen bestehen.

Die Reibfläche selbst kann aus faserverstärkter Keramik, beispielsweise in Form von keramischen Schichten, aufgebaut sein. Der Aufbau der Reibfläche kann auch durch Plasmaspritzen oder durch Einlagen faserverstärkter oder monolithischer Keramiken in eine Sub-Struktur, beispielsweise aus carbonfaserverstärktem Kunststoff, erfolgen.

Die Dicke der faserverstärkten Reibringstruktur überschreitet vorzugsweise nicht eine Ausdehnung von 20 mm.

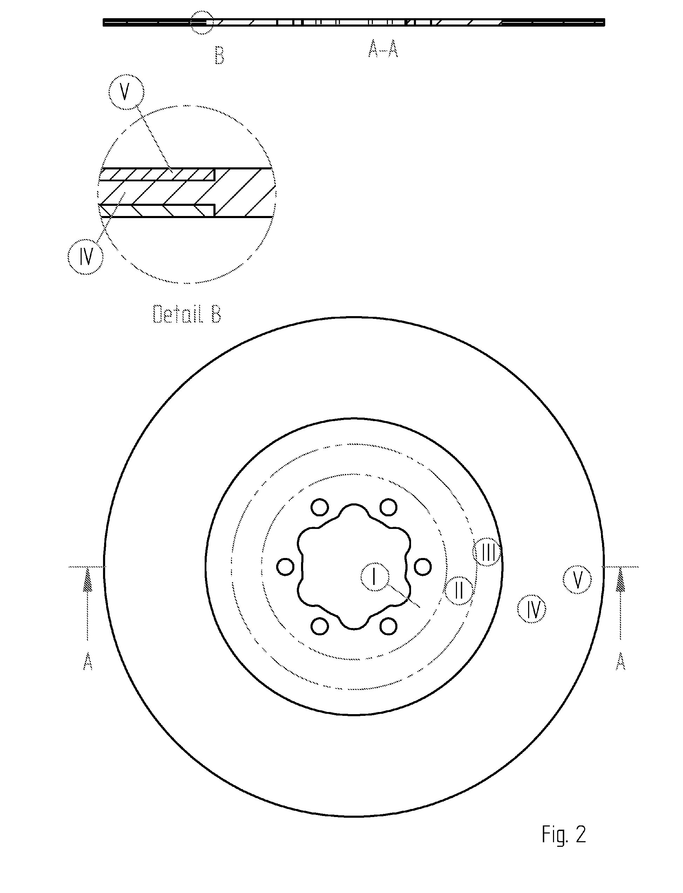

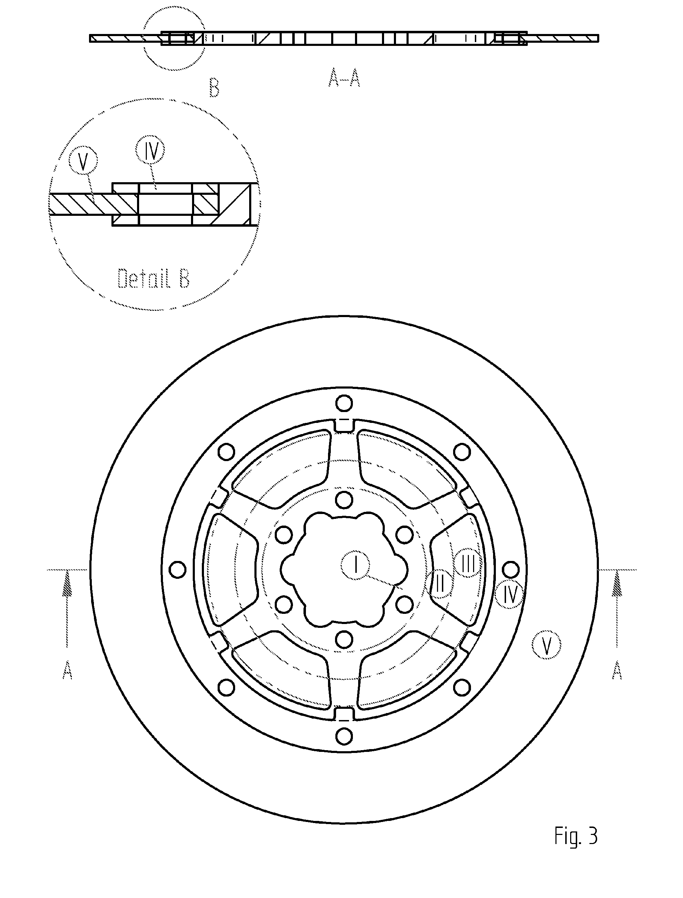

Die Reibringstruktur ist besonders bevorzugt in die 5 Bereiche Anbindungsbereich (I), innerer Ringbereich (II), äußerer Ringbereich (III), Sub-Strukturbereich (IV) und Reibflächenbereich (V) eingeteilt. In der Figur 2 sind diese Bereiche abgebildet. Die Figur 2 zeigt ferner mit der Ansicht A-A einen Schnitt durch die Scheibe an der Stelle A-A. Das Detail B zeigt eine mögliche Übergangsweise von Bereich (IV) zu (V), zum Beispiel bei einem in den Bereich (IV) erfindungsgemäß einlaminierten Reibflächenbereich (V). Zusätzlich sind die Bereiche in der Figur 3 abgebildet. Auch die Figur 3 zeigt ferner mit der Ansicht A-A einen Schnitt durch die Scheibe an der Stelle A-A. Das Detail B zeigt eine mögliche Übergangsweise von Bereich (IV) zu (V), hier allerdings zum Beispiel durch eine erfindungsgemäße Vernietung des Reibflächenbereichs (V) mit dem Sub-Strukturbereich (IV).

Der äußere Ringbereich weist in einer vorteilhaften Ausführungsform Lüftungsbohrungen auf, die zweckmäßigerweise regelmäßig verteilt um den äußeren Ringbereich angeordnet sind. Die Lüftungsbohrungen sorgen für einen schnellen Abtransport der beim Bremsen erzeugten Reibungswärme.

Zusätzlich oder alternativ kann der äußere Ringbereich Ausnehmungen zur Gewichtsreduzierung aufweisen. Auch diese Ausnehmungen sind zweckmäßigerweise regelmäßig verteilt um den äußeren Ringbereich angeordnet. Die Ausnehmungen zur Gewichtsreduzierung dienen auch gleichzeitig der Lüftung und damit dem Wärmeabtransport.

Der Anbindungsbereich (I) ist definiert durch die Ertragbarkeit lokal hoher Flächenpressung wie z.B. Anzugsmomente der Befestigungselemente sowie gegebenenfalls Lochleibung, die durch mechanische Beanspruchung (Drehmoment) hervorgerufen wird.

Der innere Ringbereich (II) ist definiert durch die Ertragbarkeit von Drehmomenten, die durch die räumliche Trennung von Anbindungs- und Reibflächenbereich sowie durch die bei der Reibung entstehenden Kräfte hervorgerufen wird.

Vorzugsweise überbrückt der äußere Ringbereich (III) die räumliche Trennung des inneren Ringbereichs (II), vom Sub-Strukturbereich (IV) und Reibflächenbereich (V).

Somit liegt eine feste Verbindung zwischen dem äußeren und inneren Ringbereich vor.

Der Sub-Strukturbereich nimmt besonders bevorzugt die bei der Reibeinwirkung erzeugten Kräfte (Druck, Scherung), Momente und thermischen Lasten auf.

Besonders bevorzugt stellt der Reibflächenbereich (V) den Bereich der Interaktion mit dem Reibpartner dar und in bevorzugter Weise ist entsprechend der Reibwert und der Verschleiß optimiert.

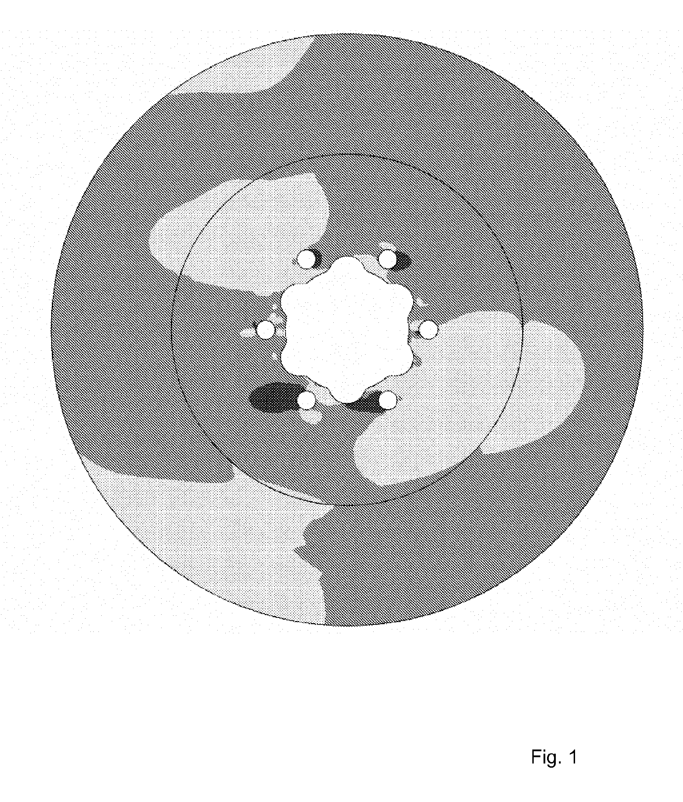

In der Figur 1 sind die Spannungen mittels FEM-Analyse dargestellt. Im Bereich (I) liegt lokal abhängig eine Druckspannung (schwarz) sowie eine Zugspannung (hellgrau) vor. Im Bereich (IV), optional auch im Bereich (V), entsteht durch den Eingriff des Reibbelags lokal eine Zugspannung (hellgrau). Die Bereiche (II) und (III) verbinden die Bereiche (I) und (IV). Dort sind, wiederum lokal differenziert und begrenzt in dieser Darstellung Zugspannungen (hellgrau) zu verzeichnen.

Mindestens die Bereiche I bis IV bestehen besonders bevorzugt aus zumindest teilweise verstärktem Werkstoff, wobei die Fasern des faserverstärkten Werkstoffs die Grenzen der Bereiche überschreiten können, d.h. zusammenhängend wirken.

Der Bereich V ist optional und kann ebenso aus faserverstärktem Werkstoff, wie auch aus isotropen oder monolithischen Werkstoffen bestehen.

Der faserverstärkte Werkstoff der Bereiche I bis IV besteht bevorzugt aus Kohlenstoff-, Glas- oder Aramid- faserverstärkten Kunststoffen oder einer Kombination aus diesen.

Bevorzugt besteht der Reibflächenbereich (V) aus faserverstärktem Kunststoff, faserverstärktem Kohlenstoff, faserverstärkter Keramik, Keramikfasern verstärkter Keramik, in den Sub-Strukturbereich (IV) eingelegten monolithischen Keramiken oder Metallen, ein- oder mehrlagigen Beschichtungen aus Keramik oder Metall oder Kombinationen davon, aufgetragen z.B. durch Plasmaspritzen auf den Sub-Strukturbereich.

Die Bereiche weisen besonders bevorzugt Aussparungen oder Durchbrüche auf. Die verbleibende Struktur ist in bevorzugter Weise lastoptimiert ausgeführt.

Vorzugsweise stehen die einzelnen Bereiche formschlüssig, kraftschlüssig, durch Verkleben, durch Einlaminieren, durch Verschrauben, durch Nieten, durch den Übergang von Fasern oder durch Kombinationen daraus miteinander in Verbindung.

Bevorzugt wird der Anbindungsbereich (I) an Stellen höchster Last, zumindest lokal, metallisch verstärkt. Bevorzugt erfolgt die metallische Verstärkung in Form von Hülsen oder eingelegten, flächigen Metallstrukturen.

Der Reibflächenbereich (V) ist in bevorzugter Weise beaufschlagt mit Keramiken aus dem Bereich der Silizide, Boride oder Oxide, oder Metalle welche eingelegt, einlaminiert, verklebt oder über ein Schichtabscheidungsverfahren aufgebracht sind.

Die faserverstärkte Reibringstruktur wird besonders bevorzugt in bremsenden oder kuppelnden Anwendungsfeldern verwendet.

Vorzugsweise wird die faserverstärkte Reibringstruktur in Fahrradbremsscheiben, Maschinenbremsscheiben, Feststellbremsen oder Maschinenkupplungen verwendet.

Ferner bevorzugt erfolgt die Verwendung der faserverstärkten Reibringstruktur in bremsenden oder kuppelnden Anwendungen von Windkraftanlagen.

Durch die erfindungsgemäße Ausführung der faserverstärkten Reibringstruktur sind zur Realisierung aller gewünschten Funktionen nur wenige Bauteile logisch miteinander zu verbinden, wobei auch die Auswechselbarkeit einfach gelöst ist.

Die faserverstärkten Reibringstrukturen weisen ein weitgehend konstantes Reibwertverhalten bei hohen Reibwerten über einen großen Temperatur- und Geschwindigkeitsbereich auf. Besonders vorteilhaft ist der geringe Materialabtrag der Reibschicht (V) und die daraus resultierende hohe Lebensdauer der Scheibe.

Die erfindungsgemäß bereitgestellten Bremseinheiten lassen sich auch in Schienenfahrzeugen und Flugzeugen mit Vorteil anwenden.

## Patentansprüche

1. Faserverstärkte Reibringstruktur, **dadurch gekennzeichnet, dass** diese aus einem faserverstärkten Werkstoff aufgebaut ist und eine räumliche Trennung zwischen dem Anbindungsbereich (Ort der Anbindung) und dem Reibflächenbereich (Ort der Reibwirkung) vorliegt.

2. Faserverstärkte Reibringstruktur nach Anspruch 1, **dadurch gekennzeichnet, dass** die Dicke der faserverstärkten Reibringstruktur eine Ausdehnung von 20 mm nicht überschreitet.

3. Faserverstärkte Reibringstruktur nach einem oder mehrerer der Ansprüche 1 und 2, **dadurch gekennzeichnet, dass** die Reibringstruktur in die 5 Bereiche Anbindungsbereich (I), inneren Ringbereich (II), äußeren Ringbereich (III), Sub-Strukturbereich (IV) und Reibflächenbereich (V) eingeteilt ist.

4. Faserverstärkte Reibringstruktur nach einem oder mehrerer der Ansprüche 1 bis 3, **dadurch gekennzeichnet, dass** der äußere Ringbereich (III) die räumliche Trennung des inneren Ringbereichs (II), des Sub-Strukturbereichs (IV) und des Reibflächenbereichs (V) überbrückt.

5. Faserverstärkte Reibringstruktur nach einem oder mehrerer der Ansprüche 1 bis 4, **dadurch gekennzeichnet, dass** der Sub-Strukturbereich (IV) die bei der Reibeinwirkung erzeugten Kräfte, Momente und thermischen Lasten aufnimmt.

6. Faserverstärkte Reibringstruktur nach einem oder mehrerer der Ansprüche 1 bis 5, **dadurch gekennzeichnet, dass** der Reibflächenbereich (V) den Bereich der Interaktion mit dem Reibpartner darstellt.

7. Faserverstärkte Reibringstruktur nach einem oder mehrerer der Ansprüche 1 bis 6, **dadurch gekennzeichnet, dass** mindestens die Bereiche I bis IV zumindest teilweise aus faserverstärktem Werkstoff bestehen, wobei die Fasern des faserverstärkten Werkstoffs die Grenzen der Bereiche überschreiten können.

8. Faserverstärkte Reibringstruktur nach einem oder mehrerer der Ansprüche 1 bis 7, **dadurch gekennzeichnet, dass** der faserverstärkte Werkstoff aus Kohlenstoff-, Glas- oder Aramid- faserverstärkten Kunststoffen oder einer Kombination aus diesen besteht.

9. Faserverstärkte Reibringstruktur nach einem oder mehrerer der Ansprüche 1 bis 8, **dadurch gekennzeichnet, dass** der Reibflächenbereich (V) aus faserverstärktem Kunststoff, faserverstärktem Kohlenstoff, faserverstärkter Keramik, Keramikfaser verstärkter Keramik, in den Sub-Strukturbereich (IV) eingelegten monolithischen Keramiken oder Metallen, ein- oder mehrlagigen Beschichtungen aus Keramik oder Metall oder Kombinationen davon besteht.

10. Faserverstärkte Reibringstruktur nach einem oder mehrerer der Ansprüche 1 bis 9, **dadurch gekennzeichnet, dass** die Bereiche Aussparungen oder Durchbrüche aufweisen.

11. Faserverstärkte Reibringstruktur nach einem oder mehrerer der Ansprüche 1 bis 10, **dadurch gekennzeichnet, dass** die einzelnen Bereiche formschlüssig, kraftschlüssig, durch Verkleben, durch Einlaminieren, durch Verschrauben, durch Nieten, durch den Übergang von Fasern oder durch Kombinationen daraus miteinander in Verbindung stehen.

12. Faserverstärkte Reibringstruktur nach einem oder mehrerer der Ansprüche 1 bis 11, **dadurch gekennzeichnet, dass** der Anbindungsbereich zumindest lokal metallisch verstärkt wird.

13. Faserverstärkte Reibringstruktur nach Anspruch 12, **dadurch gekennzeichnet, dass** die zumindest lokale metallische Verstärkung in Form von Hülsen oder eingelegten, flächigen Metallstrukturen erfolgt.

14. Faserverstärkte Reibringstruktur nach einem oder mehrerer der vorangehenden Ansprüche, **dadurch gekennzeichnet, dass** der Reibflächenbereich (V) beaufschlagt ist mit Keramiken aus dem Bereich der Silizide, Boride oder Oxide, welche eingelegt, einlaminiert, verklebt oder über ein Schichtabscheidungsverfahren aufgebracht sind.

15. Verwendung der faserverstärkten Reibringstruktur nach einem oder mehrerer der vorangehenden Ansprüche in bremsenden oder kuppelnden Anwendungsfeldern.

16. Verwendung der faserverstärkten Reibringstruktur nach einem oder mehrerer der vorangehenden Ansprüche in Fahrradbremsscheiben, Maschinenbremsscheiben, Feststellbremsen oder Maschinenkupplungen.

17. Verwendung der faserverstärkten Reibringstruktur nach Anspruch 15 in bremsenden oder kuppelnden Anwendungen von Windkraftanlagen.
